# EUROPEAN PATENT SPECIFICATION

(11) **EP 3 478 890 B1**
(45) Date of publication and mention of the grant of the patent: **14.04.2021**
(21) Application number: 17742656.6
(22) Date of filing: 30.06.2017
(51) Int. Cl.: D06F 55/00, D06F 95/00

(54) **PLASTIC CLIP AND METHOD OF CONSTRUCTION**
KUNSTSTOFFKLAMMER UND VERFAHREN ZUR KONSTRUKTION
PINCE EN PLASTIQUE ET PROCÉDÉ DE CONSTRUCTION

(30) Priority: 30.06.2016 GB 201611379
(43) Date of publication of application: 08.05.2019
(73) Proprietor: Workman, Tommy, Larne, Antrim BT40 2JY (GB)
(72) Inventor: Workman, Tommy, Larne, Antrim BT40 2JY (GB)
(74) Representative: Hanna, John Philip
(86) International application number: PCT/EP2017/066322
(87) International publication number: WO 2018/002325

(56) References cited:
- GB-A- 1 599 947
- US-A- 2 562 751
- US-A- 2 825 953
- US-A- 3 141 212
- US-A1- 2010 072 314

## Description

The present invention relates to plastic clips and methods of constructing such plastic clips. The plastic clips are particularly intended to be useful as clothes-pegs for hanging articles on a washing line, although other applications such as pegging sailing lines are envisioned.

Clothes-pegs for hanging articles, such as clothes, from a washing line have conventionally had a wooden body with two spaced apart legs which wedge articles to the washing line. Another commonly used clothes-peg includes interlocking wooden or plastic jaws mounted on a coil spring which urges the jaws to their closed position for clamping the article on the washing line. Both of these conventional types of clothes-pegs, considering the large number normally required, are relatively expensive to produce and are also relatively bulky to store.

There have been attempts to decrease the size of clothes-pegs and simplify the manufacturing procedure. In particular, US Patent Number 4,876,771 (A) in the name of Givati provides a plastic clip constructed from a strip of elastic plastic material for acting as a clothes-peg. The strip of elastic plastic material has one or more openings extending therethrough for receiving washing line(s), and a slot extending from each opening to an edge of the strip. The slots have a zigzag configuration to define two or three jaws for gripping the article to be hung from the washing line. In particular, the jaws are roughened to define non-slip surfaces for gripping clothing positioned between the jaws in a friction fit arrangement. In use, the clothes and washing line etc. have to be fed all the way through the slot such that the washing line can be received in the opening. This means that the slot has to be sufficiently wide or elastic along its entire length. As a result, the friction fit arrangement between the jaws and the clothing is weak and can easily be disrupted, such as due to wind.

US2825953 A (DRIEL) discloses a plastic clip comprising a disc of plastic material defining a tapered slot, the tapered slot extending from an inlet at the edge of the disc to an internal terminal position in the strip, the width of the tapered slot at the inlet being wider than the width of the tapered slot at the internal terminal position, the tapered slot providing a clamping surface for clamping articles that can be positioned within the tapered slot and holding them in place wherein the tapered slot tapers by decreasing gradually and continuously from the inlet to the internal terminal position.

GB1599947 A (BLYTHING) discloses a plastic clip comprising a strip of plastic material defining two tapered slots, each tapered slot extending from an inlet at the edge of the strip to an internal terminal position in the strip, the width of the tapered slot at the inlet being wider than the width of the tapered slot at the internal terminal position, the tapered slot providing a clamping surface for clamping articles that can be positioned within the tapered slot and holding them in place.

US2562751 A (TEGARTY) discloses a plastic clip comprising a strip of plastic material defining at least one tapered slot, the tapered slot extending from an inlet at the edge of the strip to an internal terminal position in the strip, the width of the tapered slot at the inlet being wider than the width of the tapered slot at the internal terminal position, the tapered slot providing a clamping surface for clamping articles that can be positioned within the tapered slot and holding them in place.

US3141212 A (COFFEY) discloses a plastic clip comprising a strip of plastic material defining at least one tapered slot, the tapered slot extending from an inlet at the edge of the strip to an internal terminal position in the strip, the width of the tapered slot at the inlet being wider than the width of the tapered slot at the internal terminal position, the tapered slot providing a clamping surface for clamping articles that can be positioned within the tapered slot and holding them in place.

It is an object of the present invention to obviate or mitigate the problems of existing plastic clips for use as clothes-pegs.

Accordingly, the present invention provides a plastic clip comprising a strip of plastic material defining a tapered slot, the tapered slot extending from an inlet at the edge of the strip to an internal terminal position in the strip, the width of the tapered slot at the inlet being wider than the width of the tapered slot at the internal terminal position, the tapered slot providing a clamping surface for clamping articles that can be positioned within the tapered slot and holding them in place characterised in that the tapered slot tapers by decreasing gradually and continuously from the inlet to the internal terminal position and the tapered slot has at least in part a serpentine path.

Advantageously, the tapered slot of the present invention tapers from a wide inlet at the edge of the strip of plastic material to a narrow internal terminal position. As the articles, such as clothing positioned on a washing line, are fed through the inlet of the tapered slot, they are subject to a clamping force. The clamping force increases as the articles are advanced through the tapered slot towards to the internal terminal position. In use, articles will be advanced through the tapered slot until the clamping force is sufficient to hold them in place, and they cannot easily be advanced any further due to the decreasing width of the tapered slot. The clamping surface of the present invention is provided along the length of the tapered slot, such that articles can be clamped in place anywhere along the tapered slot. The width of the inlet and the internal terminal position, and the gradient of the taper can be appropriately selected such that a wide range of different sizes of articles can be received in the inlet and securely clamped in place at different positions along the tapered slot.

Preferably, the plastic material being a rigid plastic material.

Ideally, the plastic material being one of polyethylene, polypropylene, polyethylene terephthalate or a combination thereof.

Most preferably, the plastic material being polypropylene.

Advantageously, by using polypropylene, the plastic clip has a level of rigidity/springiness, thereby returning to its original shape more easily after objects have been inserted into the inlet of the tapered slot. It will be appreciated that the majority of grades of polypropylene which give the plastic clip the desired level of rigidity/springiness will be useable for the present plastic clip. In addition, the plastic material could be constructed from a copolymer of polypropylene, such as a random copolymer polypropylene or a block copolymer polypropylene.

The width of the tapered slot continuously decreases from the inlet to the internal terminal position. Advantageously, the clamping force provided by the tapered slot continuously increases as the articles are fed through the tapered slot.

Ideally, the width of the tapered slot at the internal terminal position is greater than 0 mm, and is preferably between 1 and 5 mm, most preferably in the range of 2 to 4 mm.

Alternatively, the tapered slot tapers substantially to a point at the internal terminal position.

Ideally, the width of the tapered slot at the inlet is between 5 and 30 mm, and most preferably in the range of about 15 to about 25 mm.

Ideally, the tapered slot having a serpentine path from the inlet to the internal terminal position. Advantageously, the serpentine path, and in particular the one or more bends which make up the serpentine path, obstructs the path from the internal terminal position to the inlet, thereby increasing the difficultly with which the articles clamped between the clamping surface of the tapered slot can be inadvertently removed from the plastic clip.

Preferably, the serpentine path has at least two bends, or alternatively at least three bends, or alternatively still at least four bends.

Ideally, the strip is an elongate strip.

Preferably, the elongate strip comprises a first end portion, second end portion, and side surfaces extending between the first end portion and second end portion.

Ideally, the inlet being in one of the side surfaces.

Preferably, the first end portion defining an opening, and most preferably a circular opening. Advantageously, the opening can be threaded with a string or similar to allow it to be conveniently carried and manipulated. The opening could be used to conveniently tie and carry around multiple plastic clips. In addition, the opening can be used to securely attach the plastic clip, eg via string, to a washing line. Such an arrangement not only facilitates suspending a plurality of clips from the washing line to enable them to be conveniently used for hanging clothes on the line, but also prevents loss of the clips should they accidentally become detached from the washing line.

Ideally, the opening is spaced apart from and separate to the tapered slot. Preferably, the strip is reinforced around the opening.

Preferably, the inlet being proximal to the first end portion.

Ideally, the internal terminal position being proximal to the second end portion.

Ideally, the second end portion comprising a tool implement. Example tool implements include a spoon, fork, knife and comb. Advantageously, the tool implement provides an additional level of functionality to the plastic clip and makes it particularly suited for outdoor pursuits such as camping and orienteering.

Preferably, the strip comprises one or more reinforcing sections.

Ideally, the outer edge of the strip is reinforced.

Preferably, the strip is of unitary construction.

In one arrangement, the plastic clip being adapted for hanging articles of clothing from a washing line, the inlet being sized to receive the articles and the washing line.

In another arrangement, the plastic clip being used for clipping to sailing lines. In this arrangement, the plastic clip, and in particular the inlet of the tapered section is substantially larger than the plastic clip for hanging articles of clothing.

In another arrangement, the strip defines two or more tapered slots, each tapered slot extending from an inlet at the edge of the strip to an internal terminal position in the strip, the width of the tapered slot at the inlet being wider than the width of the tapered slot at the internal terminal position, and each tapered slot providing a clamping surface for clamping articles positioned within the tapered slot and holding them in place.

Ideally, the two or more tapered slots are spaced longitudinally apart on the strip. Preferably, the plastic clip is formed by injection moulding.

Alternatively, the plastic clip is formed using 3D printing.

Accordingly, the present invention further provides a method of producing a plastic clip by: producing a digital model of a plastic clip comprising a strip of plastic material defining a tapered slot having a serpentine path extending from an inlet at the edge of the strip to an internal terminal position in the strip, the width of the tapered slot at the inlet being wider than the width of the tapered slot at the internal terminal position, the tapered slot providing a clamping surface for clamping articles that can be positioned within the tapered slot and holding them in place characterised in that the tapered slot tapers by decreasing gradually and continuously from the inlet to the internal terminal position and the tapered slot has at least in part a serpentine path, and using the digital model of the plastic clip for controlling a 3D printing apparatus to perform a 3D printing process to produce the plastic clip as specified by the digital model, thereby producing the plastic clip.

Preferably, the plastic material being a rigid plastic material.

Ideally, the plastic material being one of polyethylene, polypropylene, polyethylene terephthalate or a combination thereof.

Most preferably, the plastic material being polypropylene.

Ideally, the width of the tapered slot at the internal terminal position is greater than 0 mm, and is preferably between 1 and 5 mm, most preferably in the range of 2 to 4 mm.

Alternatively, the tapered slot tapers substantially to a point at the internal terminal position.

Ideally, the width of the tapered slot at the inlet is between 5 and 30 mm, and most preferably in the range of about 15 to about 25 mm.

Ideally, the tapered slot having a serpentine path from the inlet to the internal terminal position.

Preferably, the serpentine path has at least two bends, or alternatively at least three bends, or alternatively still at least four bends.

Ideally, the strip is an elongate strip.

Preferably, the elongate strip comprises a first end portion, second end portion, and side surfaces extending between the first end portion and second end portion.

Ideally, the inlet being in one of the side surfaces.

Preferably, the first end portion defining an opening, and most preferably a circular opening.

Ideally, the opening is spaced apart from and separate to the tapered slot. Preferably, the strip is reinforced around the opening.

Preferably, the inlet being proximal to the first end portion.

Ideally, the internal terminal position being proximal to the second end portion.

Ideally, the second end portion comprising a tool implement. Example tool implements include a spoon, fork, knife and comb.

Preferably, the strip comprises one or more reinforcing sections.

Ideally, the outer edge of the strip is reinforced.

Preferably, the strip is of unitary construction.

In one arrangement, the plastic clip being adapted for hanging articles of clothing from a washing line, the inlet being sized to receive the articles and the washing line.

In another arrangement, the plastic clip being used for clipping to sailing lines. In this arrangement, the plastic clip, and in particular the inlet of the tapered section is substantially larger than the plastic clip for hanging articles of clothing.

In another arrangement, the strip defines two or more tapered slots, each tapered slot extending from an inlet at the edge of the strip to an internal terminal position in the strip, the width of the tapered slot at the inlet being wider than the width of the tapered slot at the internal terminal position, and each tapered slot providing a clamping surface for clamping articles positioned within the tapered slot and holding them in place.

Ideally, the two or more tapered slots are spaced longitudinally apart on the strip.

Accordingly, the present invention further provides a computer-readable storage medium having computer executable instructions recorded thereon which, when executed by at least one processor, cause the at least one processor to perform operations for controlling a 3D printing apparatus to perform a 3D printing process to produce a plastic clip as specified by the computer executable instructions, thereby producing the plastic clip, the plastic clip comprising a strip of plastic material defining a tapered slot having a serpentine path extending from an inlet at the edge of the strip to an internal terminal position in the strip, the width of the tapered slot at the inlet being wider than the width of the tapered slot at the internal terminal position, the tapered slot providing a clamping surface for clamping articles that can be positioned within the tapered slot and holding them in place characterised in that the tapered slot tapers by decreasing gradually and continuously from the inlet to the internal terminal position and the tapered slot has at least in part a serpentine path.

Preferably, the plastic material being a rigid plastic material.

Ideally, the plastic material being one of polyethylene, polypropylene, polyethylene terephthalate or a combination thereof.

Most preferably, the plastic material being polypropylene.

Ideally, the width of the tapered slot at the internal terminal position is greater than 0 mm, and is preferably between 1 and 5 mm, most preferably in the range of 2 to 4 mm.

Alternatively, the tapered slot tapers substantially to a point at the internal terminal position.

Ideally, the width of the tapered slot at the inlet is between 5 and 30 mm, and most preferably in the range of about 15 to about 25 mm.

Ideally, the tapered slot having a serpentine path from the inlet to the internal terminal position.

Preferably, the serpentine path has at least two bends, or alternatively at least three bends, or alternatively still at least four bends.

Ideally, the strip is an elongate strip.

Preferably, the elongate strip comprises a first end portion, second end portion, and side surfaces extending between the first end portion and second end portion.

Ideally, the inlet being in one of the side surfaces.

Preferably, the first end portion defining an opening, and most preferably a circular opening.

Ideally, the opening is spaced apart from and separate to the tapered slot.

Preferably, the strip is reinforced around the opening.

Preferably, the inlet being proximal to the first end portion.

Ideally, the internal terminal position being proximal to the second end portion.

Ideally, the second end portion comprising a tool implement. Example tool implements include a spoon, fork, knife and comb.

Preferably, the strip comprises one or more reinforcing sections.

Ideally, the outer edge of the strip is reinforced.

Preferably, the strip is of unitary construction.

In one arrangement, the plastic clip being adapted for hanging articles of clothing from a washing line, the inlet being sized to receive the articles and the washing line.

In another arrangement, the plastic clip being used for clipping to sailing lines. In this arrangement, the plastic clip, and in particular the inlet of the tapered section is substantially larger than the plastic clip for hanging articles of clothing.

In another arrangement, the strip defines two or more tapered slots, each tapered slot extending from an inlet at the edge of the strip to an internal terminal position in the strip, the width of the tapered slot at the inlet being wider than the width of the tapered slot at the internal terminal position, and each tapered slot providing a clamping surface for clamping articles positioned within the tapered slot and holding them in place.

Ideally, the two or more tapered slots are spaced longitudinally apart on the strip.

The invention will now be described with reference to the accompanying drawings which shows by way of example only one embodiment of an apparatus in accordance with the invention.

In the drawings:
Figure 1 is a perspective view of a plastic clip according to an illustrative embodiment of the present invention;
Figure 2a is a sectional view of a plastic clip along axis A-A according to an illustrative embodiment of the present invention;
Figure 2b is a front elevation view of a plastic clip according to an illustrative embodiment of the present invention;
Figure 2c is a side view of a plastic clip from the opposite view to that of Figure 2a;
Figure 3 is a block diagram of a 3D printing apparatus according to an illustrative embodiment of the present invention.
Figure 4 is a process diagram illustrating a method for manufacturing a plastic clip using a 3D printing apparatus according to an illustrative embodiment of the present invention; and
Figure 5 is a block diagram of a computer system according to an illustrative implementation.

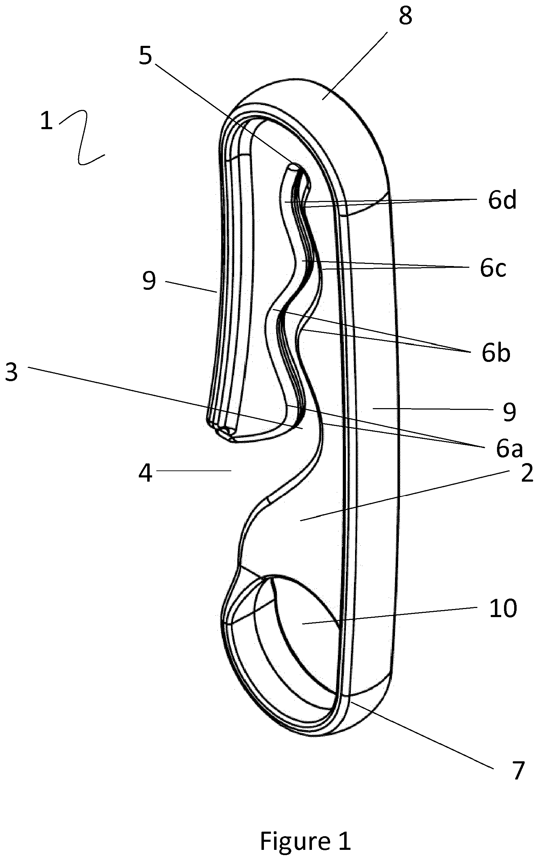

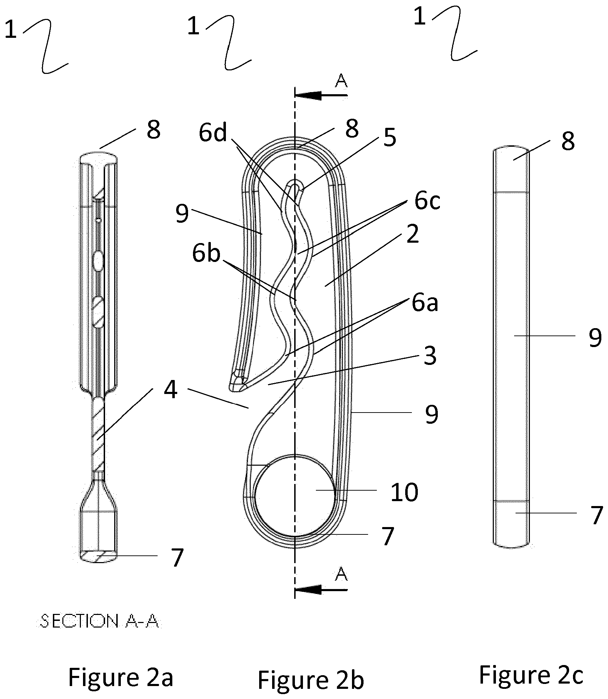

In Figures 1 and 2a-2c there is shown a plastic clip indicated generally by the reference numeral 1. The plastic clip 1 is particularly intended to be useful as a clothes-peg for handing articles on a washing line, although other applications such as pegging sailing lines are envisioned. In addition, the plastic clip 1 can be useful in outdoor pursuits such as camping, orienteering, rock climbing, canoeing, kayaking, and skiing/snowboarding.

The plastic clip 1 comprises a strip of plastic material 2 defining a tapered slot 3 extending from an inlet 4 at the edge of the strip 2 to an internal terminal position 5 in the strip 2. The width of the tapered slot 3 at the inlet 4 is wider than the width of the tapered slot 3 at the internal terminal position 5. The tapered slot 3 provides a clamping surface for clamping articles positioned within the tapered slot 3 and holding them in place.

In use, articles, such as clothing positioned on a washing line, are fed through the inlet 4 of the tapered slot 3. The inlet 4 is wide enough to allow the articles to pass through relatively easily, but as they are advanced the width of the tapered slot 3 narrows, and as a result the clamping force provided by the tapered slot 3 increases. The articles will be advanced through the tapered slot 3 until the clamping force is sufficient to hold the articles in place, and the articles cannot easily be advanced any further due to the decreasing width of the tapered slot 3. As a result of the above construction, the entire length of the tapered slot 3 acts as a clamping surface such that articles can be clamped in place anywhere along the tapered slot 3. The width of the inlet 4 and the internal terminal position 5, and the gradient of the taper can be appropriately selected such that a wide range of different sizes of articles can be received in the inlet 4 and securely clamped in place at different positions along the tapered slot 3.

The width of the tapered slot 3 continuously decreases from the inlet 4 to the internal terminal position 5 so that the clamping force provided by the tapered slot 3 continuously increases as the articles are fed through the tapered slot 3. Of course other arrangements, such as where the tapered slot 3 intermittently decreases in width are envisioned.

Strip 2 is constructed from a rigid plastic material. Example plastic materials include polyethylene, polypropylene, polyethylene terephthalate, and it can be appreciated that the strip 2 can be constructed from a combination of the above materials. In most expected arrangements, the plastic material will be polypropylene or a copolymer thereof. Polypropylene provides the plastic clip 1 with a level of rigidity/springiness such that it can return to its original shape more easily after objects have been inserted into the inlet 4 of the tapered slot 3. Suitable grades of polypropylene can be selected as appropriate to give the plastic clip 1 the desired level of rigidity/springiness. In addition, copolymer of polypropylene, such as a random copolymer polypropylene or a block copolymer polypropylene, is envisioned. Larger or smaller weights of polypropylene can be used based on the intended size and application of the plastic clip 1.

Tapered slot 3 has a serpentine path from the inlet 4 to the internal terminal position 5. Within the serpentine path there are four bends 6a, 6b, 6c, 6d therein, although other numbers of bends such as one bend, two bends, three bends, or more than four bends are also envisioned. The serpentine path, and in particular the bends 6a, 6b, 6c, 6d which make up the serpentine path, obstructs the path from the internal terminal position 5 to the inlet 4, thereby increasing the difficultly with which the articles clamped between the clamping surface of the tapered slot 3 can be inadvertently removed from the plastic clip 1.

Strip 2 of the plastic clip 1 is an elongate strip 2 with a first end portion 7, second end portion 8, and side surfaces 9 extending between the first end portion 7 and second end portion 8. The inlet 4 is arranged in one of the side surfaces 9 and is proximal to the first end portion 7 while the internal terminal position 5 is proximal to the second end portion 8. Of course, in other arrangements the inlet 4 could be arranged in the first end portion 7 or the second end portion 8. In addition, the inlet 4 could be proximal to the second end portion 8 and the internal terminal position 5 could be proximal to the first end portion 7.

First end portion 7 defines an opening 10 that is circular, although other shapes such as elliptical are envisioned. The opening 10 is spaced apart from and separate to the tapered slot 3, and the strip 2 can be reinforced around the opening 10. The opening 10 can be threaded with a string to allow it to be conveniently carried and manipulated. The opening 10 could be used to conveniently tie and carry around multiple plastic clips 1. In addition, the opening 10 can be used to securely attach the plastic clip 1, eg via string, to a washing line.

Strip 2 can comprise one or more reinforcing sections, and in the arrangement shown in the figures the outer edge of the strip is reinforced. In particular, the first end portion 7, second end portion 8, and side surfaces 9 are reinforced such that they are of thicker construction than the main body of the strip 2. Of course, in other arrangements, only part or none of the strip 2 will be reinforced.

In some arrangements not shown in the figures, the second end portion 8 comprises a tool implement 11, such as a spoon, fork, knife or comb to provide the plastic clip 1 with an additional level of functionality. This arrangement would be expected to be useful for outdoor pursuits such as camping and orienteering where carrying space is limited and weight is desired to be kept to a minimum.

The width of the tapered slot at the inlet 4 is between 5 and 30 mm, and most likely in the range of about 15 to about 25 mm.

The width of the tapered slot 3 at the internal terminal position 5 is greater than 0 mm, more likely between 1 and 5 mm, most likely in the range of 2 to 4 mm. Although, in another expected arrangement not shown in the figures, the tapered slot 3 tapers substantially to a point at the internal terminal position 5.

In one expected arrangement, the plastic clip 1 is adapted for hanging articles of clothing on a washing line. In this arrangement, the inlet 4 is sized to receive articles of clothing and the washing line together. In another expected arrangement, the plastic clip 1 is used for clipping sailing lines. In this arrangement, the plastic clip 1, and in particular the inlet 4 of the tapered section 3 is expected to be substantially larger than the plastic clip 1 for hanging articles of clothing.

In one expected arrangement not shown in the figures, the strip 2 defines two or more tapered slots 3. Each tapered slot 3 extends from an inlet 4 at the edge of the strip 2 to an internal terminal position 5 in the strip 2. The width of the tapered slot 3 at the inlet 4 being wider than the width of the tapered slot 3 at the internal terminal position 5. Each tapered slot 3 provides a clamping surface for clamping articles positioned within the tapered slot and holding them in place. The two or more tapered slots 3 are spaced longitudinally apart on the strip 2.

The strip 2 is of unitary construction. The plastic clip 1 is formed by injection moulding, or alternatively, is formed using 3D printing.

3D printing is a process that may be used to produce objects, layer by layer, without moulds or dies. Typically, such processes include providing material (e.g. plastic) in the form of a powder or a wire, and, using a heat source such as a laser beam, electron beam or an electric, or plasma welding arc, melting an amount of that material and depositing the melted material (e.g. on a base plate of a work piece). Subsequent layers are then built up upon each preceding layer.

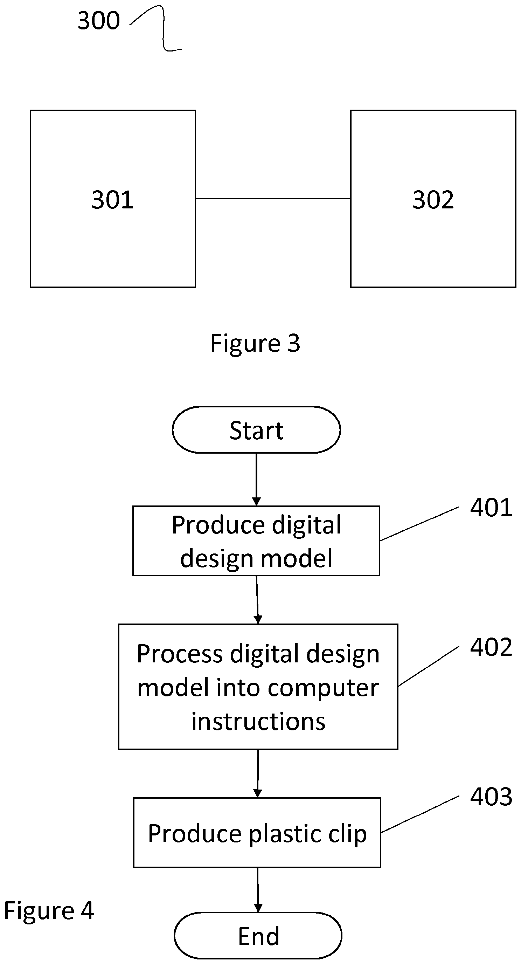

In Figure 3 there is shown a 3D printing apparatus 300 for manufacturing a plastic clip 1. The 3D printing apparatus 300 comprises a computer 301 and a 3D printer 302 operatively connected together. The computer 301 may be a networked computer operable to receive digital design models for plastic clip 1 over a network connection, such as over the internet. The computer 301 may also comprise suitable software to enable a user to create digital design models for plastic clip 1. The computer 301 is operable to process the digital design models into computer executable instructions. The computer executable instructions can be executed by one or more processors for controlling the 3D printing apparatus 300 to perform a 3D printing process to produce the plastic clip 1 as specified by the digital mode, thereby producing the plastic clip 1.

In Figure 4 there is shown an example method for manufacturing plastic clip 1 using 3D printing apparatus 300.

In step 401, the digital design model for the plastic clip 1 is specified and subsequently stored by a computer 301.

In step 402, the digital design model for the plastic clip 1 is processed into computer executable instructions.

In step 402, the one or more processors of the 3D printing apparatus perform operations for controlling the 3D printing apparatus 300 to perform a 3D printing process to produce the plastic clip 1 as specified by the digital model, thereby producing the plastic clip 1.

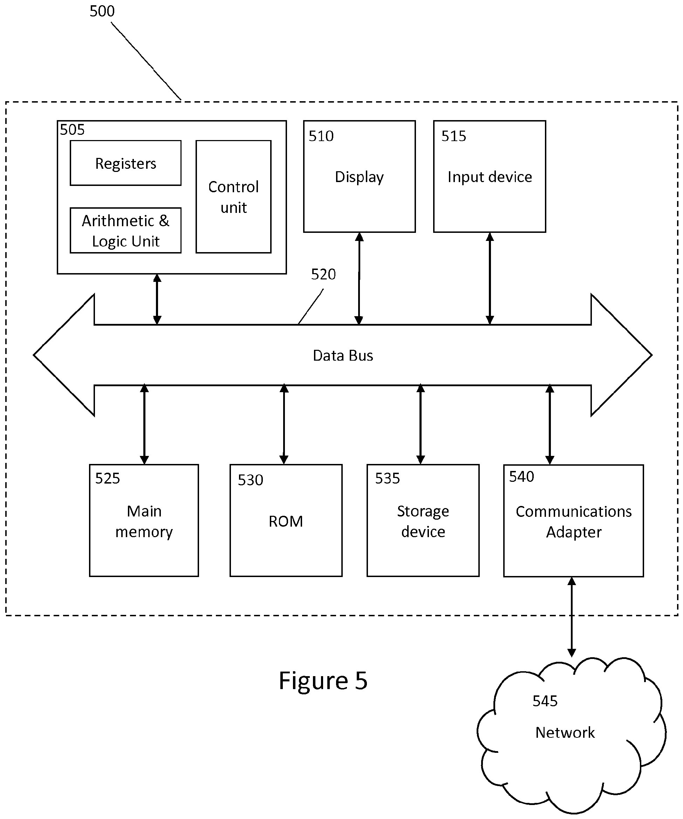

In order to provide additional context for various aspects of the invention, Figure 5 and the following discussion are intended to provide a brief, general description of a suitable operating environment in which various aspects of the invention may be implemented. While the invention is described in the general context of computer-executable instructions, such as program modules, executed by one or more computers or other devices, those skilled in the art will recognise that the invention can also be implemented in combination with other program modules and/or as a combination of hardware and software.

Generally, however, program modules include routines, programs, objects, components, data structures, etc. that perform particular tasks or implement particular data types. The operating environment is only one example of a suitable operating environment and is not intended to suggest any limitation as to the scope of use or functionality of the invention. Other well-known computer systems, environments, and/or configurations that may be suitable for use with the invention include but are not limited to, personal computers, handheld or laptop devices, multiprocessor systems, microprocessor-based systems, programmable consumer electronics, network PCs, minicomputers, mainframe computers, distributed computing environments that include the above systems or devices, and the like.

With reference to Figure 5, an exemplary environment for implementing various aspects of the invention includes a computer system 500 that can be used, for example, as an illustrative computer system 301 in a 3D printing apparatus 300. The computer system 500 includes a processing unit 505 coupled to the data bus 520 for processing information. The processing unit 505 can comprise, amongst other things, an arithmetic and logic unit which can perform operations on quantities contained in registers, and a control unit to direct operation of the processing unit. The processing unit 505 can be any of various available processors. Dual microprocessors and other multiprocessor architectures also can be employed as the processing unit 505.

The computer system 500 includes a main memory 525, such as a random access memory or other dynamic storage device, is for storing instructions and information to be executed by the processing unit 505. The computer system 500 may also include a read only memory (ROM) or other static storage device coupled to the data bus 520 for storing static instructions and information to be executed by the CPU 505. The computer system 500 may also have a storage device 535, such as a solid state device, magnetic disc, or optical disc, coupled to the data bus 520 for persistently storing instructions and information.

The computer system 500 may also include an input device 515 coupled to the data bus 520 for communicating user commands or information to the programming unit 505. Input device 515 can comprise, for example, a pointing device such as a mouse, trackball, stylus, touch screen, keyboard, microphone, joystick, game pad and the like. The computer system 500 may also include a display 510, such as a liquid crystal display or active matrix display, coupled to the data bus 520 for conveying information to a user.

The computer system 500 may also comprise a communications adapter 540 coupled to the bus 520 to allow the computer system 520 to enable communications with a network 545 and/or other remote computers. Any type of networking configuration may be achieved using communications adapter 540 including, but not limited to, wired (e.g., via Ethernet), wireless (e.g., via Wi-Fi, Bluetooth, etc,), pre-configured, ad-hoc, LAN, WAN, etc.

According to various implementations, aspects of the present invention can be achieved by the computer system 500 in response to the processing unit 505 executing an arrangement of instructions contained in main memory 525. Such instructions can be read into the main memory 525 from another computer-readable medium, such as storage device 535.

## Claims

1. A plastic clip (1) comprising a strip (2) of plastic material defining at least one tapered slot (3), the tapered slot (3) extending from an inlet (4) at an edge of the strip (2) to an internal terminal position (5) in the strip (2), the width of the tapered slot (3) at the inlet (4) being wider than the width of the tapered slot (3) at the internal terminal position (5), the tapered slot (3) providing a clamping surface for clamping articles that can be positioned within the tapered slot (3) and holding them in place, wherein the width of the tapered slot (3) tapers by decreasing gradually and continuously from the inlet (4) to the internal terminal position (5) **characterized in that** the tapered slot (3) has at least in part a serpentine path (6a, 6b, 6c, 6d).

2. A plastic clip (1) as claimed in claim 1, wherein the tapered slot (3) is configured so that, as the articles are fed through the inlet (4) of the tapered slot (3), they are subject to a clamping force defined by the clamping surface of the tapered slot (3).

3. A plastic clip (1) as claimed in claim 2, wherein the tapered slot (3) is configured so that the force for clamping articles and holding them in place is defined exclusively by the friction engagement with the surface of the slot (3) due to the tapering of the slot (3) and is additionally defined by roughness of the surface of the tapered slot (3).

4. A plastic clip (1) as claimed in any of the preceding claims, wherein the width of the tapered slot (3) at the inlet (4) is between 5 and 30 mm.

5. A plastic clip (1) as claimed in any of the preceding claims, wherein the plastic material being one of polyethylene, polypropylene, polyethylene terephthalate or a combination thereof.

6. A plastic clip (1) as claimed in claim 1, wherein the tapered slot (3) has a serpentine path (6a, 6b, 6c, 6d) from the inlet (4) to the internal terminal position (5).

7. A plastic clip (1) as claimed in claim 1, wherein the serpentine path has at least two bends (6a, 6b, 6c, 6d).

8. A plastic clip (1) as claimed in any of the preceding claims, wherein the strip (2) is an elongate strip (2) comprising a first end portion (7), a second end portion (8), and side surfaces (9) extending between the first end portion (7) and second end portion (8).

9. A plastic clip (1) as claimed in claim 8, wherein the first end portion (7) and/or the second end portion (8) and/or the side surfaces (9) comprise an opening (10) configured to securely attach the plastic clip (1) to a washing line.

10. A plastic clip (1) as claimed in any of the preceding claims, wherein the strip (2) comprises at least one reinforcing section having a thicker construction.

11. A plastic clip (1) as claimed in any of the preceding claims, wherein the outer edge of the strip (2) is reinforced.

12. A plastic clip (1) as claimed in any of the preceding claims, wherein the strip (2) is of unitary construction.

13. A plastic clip (1) as claimed in any of the preceding claims, wherein the strip (2) comprises at least two of said tapered slots (3).

14. A method for producing a plastic clip (1), **characterized in that** the method comprises the following steps: producing a digital model (400) of a plastic clip (1) according to any one of claims 1-13, and using the digital model of the plastic clip (1) for controlling a 3D printing apparatus (300) to perform a 3D printing process to produce the plastic clip (1) as specified by the digital model, thereby producing the plastic clip (1).

15. A computer-readable storage medium having computer executable instructions recorded thereon which, when executed by at least one processor (500, 505), cause the at least one processor to carry out the steps of the method of claim 14 and to perform operations for controlling a 3D printing apparatus (300) to perform a 3D printing process to produce a plastic clip (1) according to any one of claims 1-13.

## Patentansprüche

1. Kunststoffklammer (1), die einen Streifen (2) aus einem Kunststoffmaterial umfasst, der zumindest einen sich verjüngenden Schlitz (3) definiert, wobei sich der sich verjüngende Schlitz (3) von einem Einlass (4) an einer Kante des Streifens (2) zu einer inneren Endposition (5) in dem Streifen (2) erstreckt, wobei die Breite des sich verjüngenden Schlitzes (3) an dem Einlass (4) breiter ist als die Breite des sich verjüngenden Schlitzes (3) an der inneren Endposition (5), wobei der sich verjüngende Schlitz (3) eine Klemmfläche zum Klemmen von Gegenständen, die in dem sich verjüngenden Schlitz (3) positioniert werden können, bereitstellt und diese an Ort und Stelle hält, wobei die Breite des sich verjüngenden Schlitzes (3) von dem Einlass (4) zu der inneren Endposition (5) durch schrittweises und kontinuierliches Abnehmen verjüngt, **dadurch gekennzeichnet, dass** der sich verjüngende Schlitz (3) zumindest teilweise einen Serpentinenpfad (6a, 6b, 6c, 6d) aufweist.

2. Kunststoffklammer (1) nach Anspruch 1, wobei der sich verjüngende Schlitz (3) derart konfiguriert ist, dass dann, wenn die Gegenstände durch den Einlass (4) des sich verjüngenden Schlitzes (3) geführt werden, diese einer Klemmkraft ausgesetzt sind, die durch die Klemmfläche des sich verjüngenden Schlitzes (3) definiert ist.

3. Kunststoffklammer (1) nach Anspruch 2, wobei der sich verjüngende Schlitz (3) derart konfiguriert ist, dass die Kraft zum Klemmen von Gegenständen und zum Halten dieser an Ort und Stelle ausschließlich durch den Reibungseingriff mit der Oberfläche des Schlitzes (3) aufgrund der Verjüngung des Schlitzes (3) definiert ist und zusätzlich durch die Rauheit der Oberfläche des sich verjüngenden Schlitzes (3) definiert ist.

4. Kunststoffklammer (1) nach einem der vorhergehenden Ansprüche, wobei die Breite des sich verjüngenden Schlitzes (3) an dem Einlass (4) zwischen 5 und 30 mm beträgt.

5. Kunststoffklammer (1) nach einem der vorhergehenden Ansprüche, wobei das Kunststoffmaterial eines von Polyethylen, Polypropylen, Polyethylen-Terephthalat oder eine Kombination daraus ist.

6. Kunststoffklammer (1) nach Anspruch 1, wobei der sich verjüngende Schlitz (3) einen Serpentinenpfad (6a, 6b, 6c, 6d) von dem Einlass (4) bis zu der inneren Endposition (5) aufweist.

7. Kunststoffklammer (1) nach Anspruch 1, wobei der Serpentinenpfad (6a, 6b, 6c, 6d) mindestens zwei Kurven aufweist.

8. Kunststoffklammer (1) nach einem der vorhergehenden Ansprüche, wobei der Streifen (2) ein langgestreckter Streifen (2) ist, der einen ersten Endabschnitt (7), einen zweiten Endabschnitt (8) und Seitenflächen (9), die sich zwischen dem ersten Endabschnitt (7) und dem zweiten Endabschnitt (8) erstrecken, umfasst.

9. Kunststoffklammer (1) nach Anspruch 8, wobei der erste Endabschnitt (7) und/oder der zweite Endabschnitt (8) und/oder die Seitenflächen (9) eine Öffnung (10) aufweisen, die konfiguriert ist, die Kunststoffklammer (1) an einer Wäscheleine sicher zu befestigen.

10. Kunststoffklammer (1) nach einem der vorhergehenden Ansprüche, wobei der Streifen (2) mindestens einen Verstärkungsabschnitt umfasst, der eine dickere Bauform aufweist.

11. Kunststoffklammer (1) nach einem der vorhergehenden Ansprüche, wobei die Außenkante des Streifens (2) verstärkt ist.

12. Kunststoffklammer (1) nach einem der vorhergehenden Ansprüche, wobei der Streifen (2) eine einteilige Bauform aufweist.

13. Kunststoffklammer (1) nach einem der vorhergehenden Ansprüche, wobei der Streifen (2) mindestens zwei der sich verjüngenden Schlitze (3) umfasst.

14. Verfahren zum Herstellen einer Kunststoffklammer (1), **dadurch gekennzeichnet, dass** das Verfahren die folgenden Schritte umfasst: Herstellen eines digitalen Modells (400) einer Kunststoffklammer (1) nach einem der Ansprüche 1-13, und Verwenden des digitalen Modells der Kunststoffklammer (1) zum Steuern einer 3D-Druckvorrichtung (300), um einen 3D-Druckprozess durchzuführen, um die Kunststoffklammer (1) wie durch das digitale Modell spezifiziert herzustellen, und dadurch Herstellen der Kunststoffklammer (1).

15. Computerlesbares Speichermedium, auf dem von einem Computer ausführbare Anweisungen aufgezeichnet sind, die dann, wenn sie von mindestens einem Prozessor (500, 505) ausgeführt werden, den mindestens einen Prozessor veranlassen, die Schritte des Verfahrens nach Anspruch 14 auszuführen und Vorgänge zum Steuern einer 3D-Druckvorrichtung (300) durchzuführen, um einen 3D-Druckprozess durchzuführen, um eine Kunststoffklammer (1) nach einem der Ansprüche 1-13 herzustellen.

## Revendications

1. Pince en plastique (1) comprenant une bande (2) de matière plastique définissant au moins une fente effilée (3), la fente effilée (3) s'étendant depuis une entrée (4) au niveau d'un bord de la bande (2) jusqu'à une position terminale interne (5) dans la bande (2), la largeur de la fente effilée (3) au niveau de l'entrée (4) étant plus large que la largeur de la fente effilée (3) au niveau de la position terminale interne (5), la fente effilée (3) fournissant une surface de serrage pour serrer des articles qui peuvent être positionnés à l'intérieur de la fente effilée (3) et les maintenir en place, dans laquelle la largeur de la fente effilée (3) s'effile en diminuant progressivement et continuellement depuis l'entrée (4) jusqu'à la position terminale interne (5),
**caractérisée en ce que**
la fente effilée (3) présente au moins en partie un chemin en serpentin (6a, 6b, 6c, 6d).

2. Pince en plastique (1) selon la revendication 1,
dans laquelle la fente effilée (3) est configurée de telle sorte que, lorsque les articles sont amenés à travers l'entrée (4) de la fente effilée (3), ils sont soumis à une force de serrage définie par la surface de serrage de la fente effilée (3).

3. Pince en plastique (1) selon la revendication 2, dans laquelle la fente effilée (3) est configurée de telle sorte que la force pour serrer les articles et les maintenir en place est définie exclusivement par l'engagement par friction avec la surface de la fente (3) due à l'effilement de la fente (3) et est en outre définie par la rugosité de la surface de la fente effilée (3).

4. Pince en plastique (1) selon l'une quelconque des revendications précédentes, dans laquelle la largeur de la fente effilée (3) au niveau de l'entrée (4) est comprise entre 5 et 30 mm.

5. Pince en plastique (1) selon l'une quelconque des revendications précédentes, dans laquelle la matière plastique est l'une parmi le polyéthylène, le polypropylène, le polyéthylène téréphtalate ou une combinaison de ceux-ci.

6. Pince en plastique (1) selon la revendication 1, dans laquelle la fente effilée (3) a un chemin en serpentin (6a, 6b, 6c, 6d) depuis l'entrée (4) jusqu'à la position terminale interne (5).

7. Pince en plastique (1) selon la revendication 1, dans laquelle le chemin en serpentin comporte au moins deux coudes (6a, 6b, 6c, 6d).

8. Pince en plastique (1) selon l'une quelconque des revendications précédentes, dans laquelle la bande (2) est une bande allongée (2) comprenant une première partie d'extrémité (7), une seconde partie d'extrémité (8) et des surfaces latérales (9) s'étendant entre la première partie d'extrémité (7) et la seconde partie d'extrémité (8) .

9. Pince en plastique (1) selon la revendication 8, dans laquelle la première partie d'extrémité (7) et/ou la seconde partie d'extrémité (8) et/ou les surfaces latérales (9) comprennent une ouverture (10) configurée pour fixer solidement la pince en plastique (1) sur une ligne de lavage.

10. Pince en plastique (1) selon l'une quelconque des revendications précédentes, dans laquelle la bande (2) comprend au moins une section de renforcement ayant une construction plus épaisse.

11. Pince en plastique (1) selon l'une quelconque des revendications précédentes, dans laquelle le bord extérieur de la bande (2) est renforcé.

12. Pince en plastique (1) selon l'une quelconque des revendications précédentes, dans laquelle la bande (2) est de construction unitaire.

13. Pince en plastique (1) selon l'une quelconque des revendications précédentes, dans laquelle la bande (2) comprend au moins deux desdites fentes effilées (3).

14. Procédé de production d'une pince en plastique (1), **caractérisé en ce que** le procédé comprend les étapes suivantes : produire un modèle numérique (400) d'une pince en plastique (1) selon l'une quelconque des revendications 1 à 13, et utiliser le modèle numérique de la pince en plastique (1) pour commander un appareil d'impression en 3D (300) pour exécuter un processus d'impression en 3D pour produire la pince en plastique (1) conforme aux spécifications du modèle numérique, produisant ainsi la pince en plastique (1).

15. Support de stockage lisible par ordinateur sur lequel sont enregistrées des instructions exécutables par ordinateur qui, lorsqu'elles sont exécutées par au moins un processeur (500, 505), amènent l'au moins un processeur à exécuter les étapes du procédé de la revendication 14 et à effectuer des opérations pour commander un appareil d'impression en 3D (300) pour effectuer un processus d'impression en 3D pour produire une pince en plastique (1) selon l'une quelconque des revendications 1 à 13.
